# EUROPÄISCHE PATENTANMELDUNG

(11) **EP 3 536 986 A1**
(43) Veröffentlichungstag der Anmeldung: **11.09.2019**
(21) Anmeldenummer: 18159869.9
(22) Anmeldetag: 05.03.2018
(51) Int. Cl.: F16B 13/06

(54) **SPREIZANKER MIT SPREIZHÜLSE MIT UNTERSCHIEDLICHEN ZUNGEN**

(71) Anmelder: HILTI Aktiengesellschaft, 9494 Schaan (LI)
(72) Erfinder: Shimahara, Hideki, 9472 Grabs (CH); Li, Yijun, 9470 Buchs (CH); Yan, Wentao, 9470 Buchs SG (CH)
(74) Vertreter: Hilti Aktiengesellschaft Corporate Intellectual Property

(57) **Zusammenfassung**

Die Erfindung betrifft einen Spreizanker mit einer Spreizhülse (30) und einem Ankerbolzen (10) zum Spreizen der Spreizhülse (30) beim Versetzen des Ankerbolzens (10) relativ zur Spreizhülse (30) nach hinten, wobei die Spreizhülse (30) zumindest eine Spreizzunge (31) mit einem freien Spreizzungenende (33) und zumindest eine Ankerzunge (32) mit einem freien Ankerzungenende (34) aufweist, wobei das freie Spreizzungenende (33) und das freie Ankerzungenende (34) unterschiedlich konfiguriert sind.

## Beschreibung

Die Erfindung betrifft einen Spreizanker gemäss dem Oberbegriff des Anspruchs 1. Ein solcher Spreizanker ist ausgestattet mit einer Spreizhülse und einem Ankerbolzen zum Spreizen der Spreizhülse beim Versetzen des Ankerbolzens relativ zur Spreizhülse nach hinten.

Die WO15067578 A1 zeigt einen Spreizanker, in dessen Spreizkörper nach vorne hin geschlossene Furchen eingebracht sind, welche die Kontaktfläche zwischen dem Spreizkörper und der Spreizhülse verringern.

Die EP2848825 A1 beschreibt einen Spreizanker, dessen Spreizhülse nach innen vorstehende, axial verlaufende Stege aufweist. Beim Spreizen der Spreizhülse gelangen die Stege bereichsweise in den Spreizbereich des Spreizankers und werden vom Spreizbereich radial nach aussen gedrängt wird.

Aus der DE2256822 A1 gehen Spreizanker hervor, die eine Verdrehsicherung zwischen Spreizhülse und Ankerbolzen aufweisen. Die Verdrehsicherung kann beispielsweise durch eine randseitige Abkantung der Spreizhülse gebildet sein, die in eine Nut im Ankerbolzen eingreift.

Die WO12126700 A1 beschreibt einen Spreizanker, dessen Spreizkörper in einem Endbereich axial verlaufende Stege aufweist. Die EP2309138 A2 beschreibt einen Spreizanker, dessen Spreizkörper im Querschnitt Ecken aufweist.

Aufgabe der Erfindung ist es, einen Spreizanker anzugeben, der bei besonders geringem Herstellungsaufwand besonders leistungsfähig ist und besonders vielseitig einsetzbar ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass die Spreizhülse zumindest eine Spreizzunge mit einem freien Spreizzungenende und zumindest eine Ankerzunge mit einem freien Ankerzungenende aufweist, wobei das freie Spreizzungenende und das freie Ankerzungenende unterschiedlich konfiguriert sind.

Ein Grundgedanke der Erfindung kann darin gesehen werden, an derselben Spreizhülse unterschiedlich konfigurierte Zungen vorzusehen, wobei insbesondere die freien Enden der Zungen, die regelmässig zuerst an der umgebenden Bohrlochwand zur Anlage kommen, und die somit das Verankerungsverhalten massgeblich beeinflussen, unterschiedlich konfiguriert sind. Hierdurch können zusätzliche konstruktive Freiheitsgrade zur Verfügung gestellt werden, die es erlauben, die teilweise widersprüchlichen Anforderungen, die an die Spreizhülse gestellt werden, aufzulösen. Insbesondere können die Spreizzunge und die Ankerzunge jeweils für unterschiedliche Funktionsaufgaben optimiert werden. Beispielsweise kann die Spreizzunge für den Halt der Spreizhülse vor allem beim anfänglichen Spreizen durch den Ankerbolzen vorgesehen sein. Die Ankerzunge kann mit einer Verzögerung gespreizt werden - erst nachdem eine gewisse Verankerung durch erstes Anspreizen der Spreizzunge gewährleistet ist - um einen relativ grossen Hinterschnitt im Beton zu erzeugen. Dieser Hinterschnitt kann eine grössere äussere Reibungszahl bewirken. Durch Erhöhung von innerer und äusserer Reibung ist eine Erhöhung des maximalen Auszugwertes möglich. Darüber hinaus kann dadurch eine Hülsenverschiebung reduziert werden. Generell kann bei geringem Aufwand eine besonders leistungsfähiger und/oder vielseitig einsetzbarer Spreizanker erhalten werden.

Unter dem freien Spreizzungenende kann wie bereits erwähnt insbesondere dasjenige Ende der Spreizzunge verstanden werden, das beim bestimmungsgemässen Betrieb an der umgebenden Bohrlochwand zu Anlage kommt. Ebenso kann unter dem freien Ankerzungenende wie bereits erwähnt insbesondere dasjenige Ende der Ankerzunge verstanden werden, das beim bestimmungsgemässen Betrieb an der umgebenden Bohrlochwand zu Anlage kommt. Das freie Spreizzungenende erstreckt sich vorteilhafterweise über eine axiale Länge von maximal 10%, 5% oder 2% der Gesamtlänge der Spreizzunge. Das freie Ankerzungenende erstreckt sich vorteilhafterweise über eine axiale Länge von maximal 10%, 5% oder 2% der Gesamtlänge der Ankerzunge. Ausser an den freien Enden können sich Spreizzunge und Ankerzunge auch in anderen Bereichen unterscheiden, müssen dies aber nicht.

Die Spreizhülse umgibt den Ankerbolzen. Die Spreizhülse bildet vorzugsweise einen offenen Ring, also eine C-Form, in dem beziehungsweise in der der Ankerbolzen aufgenommen ist, was eine einfache Herstellung durch Wickeln einer Platine um den Ankerbolzen ermöglicht.

Der Ankerbolzen kann die Spreizzunge und die Ankerzunge radial verdrängen, wenn der Ankerbolzen relativ zur Spreizhülse axial nach hinten versetzt wird. Vorzugsweise können die Spreizhülse und der Ankerbolzen koaxial angeordnet sein.

Der Ankerbolzen kann mehrteilig ausgeführt sein und beispielsweise aus einer Ankerstange und einem mit der Ankerstange verschraubten Spreizkörper bestehen, welcher für das Spreizen zumindest der Spreizzunge, vorzugsweise auch der Ankerzunge zuständig ist. Besonders bevorzugt ist es aber, dass der Ankerbolzen einstückig ausgebildet ist und dass insbesondere der Spreizkörper, welcher für das Spreizen zumindest der Spreizzunge, vorzugsweise auch der Ankerzunge zuständig ist, integral am Ankerbolzen angeordnet ist. In beiden Fäll ist der Spreizkörper zugfest am Ankerbolzen angeordnet, so dass über den Spreizkörper Zugkräfte auf die Spreizhülse übertragen werden können. Vorzugsweise bestehen die Spreizhülse und/oder der Ankerbolzen, insbesondere sein Spreizkörper, zumindest bereichsweise aus einem Metallmaterial. Insbesondere kann der Spreizkörper als Spreizkonus ausgebildet sein.

In einem rückwärtigen Bereich des Ankerbolzens kann der Ankerbolzen eine Lastangriffsstruktur aufweisen. Die Lastangriffsstruktur dient zum Einleiten von Zugkräften in den Ankerbolzen. Die Lastangriffsstruktur kann beispielsweise ein Aussengewinde oder ein Innengewinde sein. In einer anderen Ausgestaltung kann die Lastangriffsstruktur auch ein Kopf sein, der ein Querschnittsmaximum bildet.

Soweit nicht anders angegeben sollen die hier beschriebenen Merkmale insbesondere für einen nicht-montierten Spreizanker, also einen Spreizanker vor der Montage, gelten, und/oder für einen Zustand, in dem die Zungen noch nicht vom Ankerbolzen gespreizt sind.

Soweit hiervon der Axialrichtung, der Umfangsrichtung und der Radialrichtung die Rede ist, soll sich dies insbesondere auf die Längsachse des Ankerbolzens beziehen, welche insbesondere mit der Längsachse des Spreizankers zusammenfallen kann. Auch die verschiedenen Neigungswinkel sollen sich insbesondere auf die Längsachse des Ankerbolzens beziehen. Die Längsachse des Ankerbolzens verläuft insbesondere in Montagerichtung, also in der Richtung, in welche der Ankerbolzen bei bestimmungsgemässer Montage in ein Bohrloch eingeschoben wird. Die Richtungsangaben "vorne" und "hinten" beziehungsweise "rückwärtig" sollen hier einheitlich verwendet werden, dies insbesondere soweit diese Richtungsangaben im Zusammenhang mit dem Ankerbolzen und der Spreizhülse verwendet werden. Insbesondere sollen sich die Richtungsangaben auf die Axialrichtung beziehen.

Vorteilhafterweise sind das freie Spreizzungenende und das freie Ankerzungenende auf der radialen Aussenseite der Spreizhülse unterschiedlich konfiguriert. Da auf der radialen Aussenseite der Spreizhülse der Kontakt mit der Bohrlochwand stattfindet, kann bei einer hülsenaussenseitigen Anordnung die unterschiedliche Konfiguration besonders gut wirken.

Besonders bevorzugt ist es, dass das freie Spreizzungenende und das freie Ankerzungenende, vorzugsweise zumindest auf der radialen Aussenseite der Spreizhülse, unterschiedliche Formen aufweisen, vorzugsweise unterschiedliche Längsschnittsformen. Die unterschiedliche Konfiguration der Zungen beinhaltet demgemäss unterschiedliche Geometrien, insbesondere auf der radialen Aussenseite der Spreizhülse. Dies kann die Herstellung noch weiter vereinfachen. Insbesondere können unterschiedliche Längsschnittsformen vorgesehen sein, also Formen in Längsschnittsebenen, wobei unter einer Längsschnittsebene in fachüblicher Weise eine Ebene verstanden werden kann, welche die Längsachse enthält.

Zweckmässigerweise springt am freien Ankerzungenende die radiale Aussenseite der Spreizhülse radial nach aussen, also vom Ankerbolzen und/oder seiner Längsachse hinweg, vor. Insbesondere springt am freien Ankerzungenende die radiale Aussenseite der Spreizhülse gegenüber weiter hinten liegenden Bereichen der Ankerzunge radial nach aussen vor. Am freien Ankerzungenende ist also ein radial nach aussen vorstehender Vorsprung gebildet. Hierdurch kann in herstellungstechnisch besonders einfacher Art und Weise eine besonders wirksame Reibungserhöhung, vorzugsweise unter Hinterschnittbildung, an der Ankerzunge ermöglicht werden. Insbesondere kann die Ankerzunge an ihrem freien Ankerzungenende eine radial nach aussen gekrümmte Kralle bilden.

Es kann auch vorgesehen werden, dass am freien Spreizzungenende die radiale Aussenseite der Spreizhülse, vorzugsweise stufenartig, radial nach innen, also zum Ankerbolzen und/oder seiner Längsachse hin, zurückversetzt ist. Insbesondere ist am freien Spreizzungenende die radiale Aussenseite der Spreizhülse gegenüber weiter hinten liegenden Bereichen der Spreizzunge, vorzugsweise stufenartig, radial nach innen zurückversetzt. Am freien Spreizzungenende ist somit hülsenaussenseitig eine radiale Vertiefung vorgesehen. Insbesondere kann am freien Spreizzungenende eine Stufenstruktur, welche die Längsachse umgibt, und/oder eine Schulter, welche die Längsachse umgibt, vorgesehen werden. Hierdurch kann in herstellungstechnisch besonders einfacher Art und Weise eine besonders günstige Interaktion der Spreizhülse mit der umgebenden Bohrlochwand erzielt werden. Insbesondere kann die Vertiefung im Längsschnitt stufenförmig und/oder nach vorne hin offen sein.

Unter der radialen Aussenseite der Spreizhülse kann in fachüblicher Weise insbesondere die Seite der Spreizhülse verstanden werden, welche dem Ankerbolzen abgewandt ist und/oder die Seite der Spreizhülse, welche die aussenliegende Mantelfläche der Spreizhülse bildet.

Die Spreizzunge und die Ankerzunge können in dieselbe Richtung zeigen, insbesondere entweder beide nach vorne oder beide nach hinten. Dies soll insbesondere beinhalten, dass entweder das freie Spreizzungenende vorne an der Spreizzunge und das freie Ankerzungenende vorne an der Ankerzunge angeordnet ist, oder das freie Spreizzungenende hinten an der Spreizzunge und das freie Ankerzungenende hinten an der Ankerzunge angeordnet ist. Insbesondere kann somit die Biegerichtung der beiden Zungen beim radialen Verdrängen dieselbe sein. Dies kann unter anderem im Hinblick auf den Kraftfluss vorteilhaft sein und/oder den Herstellungsaufwand weiter verringern.

Besonders bevorzugt ist es, dass sowohl die Spreizzunge als auch die Ankerzunge nach vorne zeigen, was insbesondere beinhalten kann, dass das freie Spreizzungenende vorne an der Spreizzunge und das freie Ankerzungenende vorne an der Ankerzunge angeordnet ist. Dies kann im Hinblick auf das Spreizverhalten vorteilhaft sein.

Vorzugsweise stehen sowohl die Spreizzunge als auch die Ankerzunge vorne an der Spreizhülse vor. Insbesondere bilden somit das freie Spreizzungenende und das freie Ankerzungenende zumindest einen Abschnitt der vorderen Stirnseite der Spreizhülse. Bei einer solchen Ausgestaltung kann der Herstellungsaufwand besonders gering sein, insbesondere weil sowohl die Spreizzunge als auch die Ankerzunge durch Schlitze gebildet werden können, welche sich von der Stirnseite der Spreizhülse axial nach hinten in die Spreizhülse erstrecken. Darüber hinaus kann bei einer vorderseitigen Anordnung sowohl der Spreizzunge als auch der Ankerzunge eine besonders tiefe Lasteinleitung in das Bohrloch ermöglicht werden, was im Hinblick auf die Lastwerte vorteilhaft sein kann. Insbesondere kann eine Ausgestaltung vorgesehen sein, bei der die Spreizzunge und die Ankerzunge in Umfangsrichtung um die Längsachse nebeneinander angeordnet sind.

Die Spreizzunge und die Ankerzunge können mit ihren freien Enden auf derselben axialen Höhe enden, das heisst die freien Enden der beiden Zungen können axial nebeneinanderliegen. Dies kann herstellungstechnische Vorteile haben. Besonders bevorzugt kann es aber sein, dass die Spreizzunge und die Ankerzunge unterschiedlich weit nach vorne vorstehen. Insbesondere kann die Spreizzunge weiter nach vorne reichen als die Ankerzunge. Hierdurch kann das Verhalten des Spreizankers in konstruktiv besonders einfacher Weise noch besser an seine Umgebung angepasst werden.

Besonders bevorzugt ist es, dass der Ankerbolzen eine nach hinten weisende Spreizschräge zum radialen Verdrängen der Spreizzunge und eine nach hinten weisende Ankerschräge zum radialen Verdrängen der Ankerzunge aufweist.

Vorzugsweise verläuft die Ankerschräge zumindest bereichsweise steiler als die Spreizschräge. Die beiden Zungen sind also nicht nur verschieden konfiguriert, sondern werden vom Ankerbolzen auch mit unterschiedlichen Spreizwinkeln gespreizt. Hierdurch kann das Ankerverhalten noch weiter verbessert werden. Unter der zumindest bereichsweise "steileren" Anordnung der Ankerschräge verglichen mit der Spreizschräge soll insbesondere verstanden werden, dass die Ankerschräge zumindest bereichsweise einen grösseren spitzen Neigungswinkel zur Längsachse des Ankerbolzens aufweist als die Spreizschräge, dies gemessen insbesondere in einer die Längsachse des Ankerbolzens enthaltenden Längsschnittsebene. "Steiler" soll also insbesondere "bezogen auf die Längsachse steiler" beinhalten.

Insbesondere sind die Spreizschräge und die Ankerschräge zugfest am Ankerbolzen angeordnet, so dass nach hinten gerichtete Zugkräfte über diese Schrägen vom Ankerbolzen an die Zungen übertragen werden können. Insbesondere zeigt die Spreizzunge zur Spreizschräge und die Ankerzunge zur Ankerschräge. Die Spreizschräge ist insbesondere zumindest bereichsweise vor der Spreizzunge angeordnet. Die Ankerschräge ist insbesondere zumindest bereichsweise vor der Ankerzunge angeordnet.

Der Ankerbolzen kann die beiden Zungen mit seinen Schrägen radial verdrängen, wenn der Ankerbolzen relativ zur Spreizhülse axial nach hinten versetzt wird. Insbesondere dient die Spreizschräge zum radialen Verdrängen der Spreizzunge beim axialen Versetzen der Spreizschräge relativ zur Spreizzunge nach hinten und dient die Ankerschräge zum radialen Verdrängen der Ankerzunge beim axialen Versetzen der Ankerschräge relativ zur Ankerzunge nach hinten.

Die beiden Schrägen weisen beide nach hinten, insbesondere bezogen auf die Längsachse des Ankerbolzens, was insbesondere beinhalten kann, dass der Ankerbolzen hinter den beiden Schrägen jeweils einen Freiraum aufweist. Insbesondere nähern sich sowohl die Spreizschräge als auch die Ankerschräge nach hinten hin an die Längsachse des Ankerbolzens an.

Insbesondere kann die Ankerschräge einen maximalen Neigungswinkel mit der Längsachse aufweisen, der im Bereich von 36° bis 70° liegt. Dies ermöglicht eine besonders gute Verankerung. Die Spreizschräge kann beispielsweise einen maximalen Neigungswinkel mit der Längsachse von etwa 30° aufweisen.

Insbesondere kann vorgesehen werden, dass die Ankerschräge in einem hinteren Bereich der Ankerschräge weniger steil verläuft als in einem vorderen Bereich der Ankerschräge. Besonders bevorzugt ist es, dass die Ankerschräge in einem hinteren Bereich der Ankerschräge weniger steil verläuft als die Spreizschräge, und dass die Ankerschräge in einem vorderen Bereich der Ankerschräge steiler verläuft als die Spreizschräge. Hierdurch kann in besonders einfacher Art und Weise erreicht werden, dass bei geringer Belastung im Ankerbolzen zunächst die Spreizzunge aktiviert wird, und die Ankerzunge erst bei höherer Belastung aktiviert wird, dies dann aber besonders intensiv für eine besonders gute Verankerung. Die Ankerzunge wird beim rückwärtigen Versetzen des Ankerbolzens relativ zur Spreizhülse also anfangs weniger weit radial verdrängt als die Spreizzunge. Bei fortgeschrittener rückwärtiger Verschiebung des Ankerbolzens relativ zur Spreizhülse wird die Ankerzunge dann aber weiter radial verdrängt als die Spreizzunge, insbesondere unter Hinterschnittbildung an der Ankerzunge. Wie schon weiter oben angedeutet kann hierdurch ein besonders gutes Lastverhalten erreicht werden. Insbesondere kann die innere Reibung zu Beginn des Montagevorgangs besonders klein gehalten werden, was einem unerwünschten frühen Ausziehen des Spreizankers besonders effizient entgegenwirken kann.

Vorzugsweise deckt die Ankerschräge das freie Ende der Ankerzunge, in Umfangsrichtung des Ankerbolzens betrachtet, komplett ab. Mit anderen Worten ist der Winkelbereich, den die Ankerschräge um die Längsachse des Ankerbolzens überspannt, gleich gross oder grösser als der Winkelbereich, den das freie Ende der Ankerzunge um die Längsachse des Ankerbolzens überspannt, und der Winkelbereich, den das freie Ende der Ankerzunge um die Längsachse des Ankerbolzens überspannt, liegt innerhalb des Winkelbereichs, den die Ankerschräge um die Längsachse des Ankerbolzens überspannt. Hierdurch kann die Ankerzunge besonders wirkungsvoll aktiviert werden.

Eine weitere bevorzugte Ausgestaltung der Erfindung liegt darin, dass die Ankerschräge an einer im Ankerbolzen angeordneten Mulde gebildet ist. Diese Mulde erstreckt sich radial in den Ankerbolzen hinein. Der Boden der Mulde kann den hinteren Bereich der Ankerschräge und eine die Mulde vorderseitig begrenzende Wand kann den vorderen Bereich der Ankerschräge bilden. Diese Ausgestaltung erlaubt eine besonders einfache Herstellung eines erfindungsgemässen Spreizankers. Die Mulde kann vorzugsweise im gegebenenfalls vorhandenen Spreizkörper des Ankerbolzens angeordnet sein.

Es kann vorgesehen werden, dass sich die Ankerschräge und die Spreizschräge axial überlappen. Zweckmässigerweise weist der Ankerbolzen, wie schon weiter oben angedeutet, einen Spreizkörper auf, wobei zumindest die Spreizschräge, vorzugsweise sowohl die Ankerschräge als auch die Spreizschräge, am Spreizkörper gebildet ist. Dies kann unter anderem herstellungstechnische Vorteile haben und für eine besonders konzentrierte Lasteinleitung, insbesondere tief im Bohrloch, sorgen. Der Spreizkörper kann vorzugsweise einstückig mit dem Rest des Ankerbolzens, insbesondere einstückig mit einer Ankerstange des Ankerbolzens, ausgeführt sein. Grundsätzlich könnte der Spreizkörper auch getrennt von der Ankerstange ausgeführt sein, dann aber zugfest mit der Ankerstange gekoppelt. Der Spreizkörper kann insbesondere ein Spreizkonus sein.

Es kann auch vorgesehen werden, dass die Spreizhülse mehrere Spreizzungen und/oder mehrere Ankerzungen aufweist. Dies kann im Hinblick auf eine besonders homogene Krafteinleitung in die umgebende Bohrlochwand, auf die Vermeidung von Spannungsspitzen und somit auf besonders gute Lastwerte vorteilhaft sein. Soweit mehrere Spreizzungen und/oder mehrere Ankerzungen vorgesehen sind, können diese vorzugsweise so ausgebildet sein, wie es hier im Zusammenhang mit einer Spreizzunge beziehungsweise einer Ankerzunge beschrieben ist.

Die Erfindung betrifft auch die bestimmungsgemässe Verwendung eines erfindungsgemässen Spreizankers. Insbesondere betrifft die Erfindung die Verwendung eines erfindungsgemässen Spreizankers, bei welcher der Ankerbolzen relativ zur, insbesondere in einem Bohrloch angeordneten, Spreizhülse nach hinten versetzt wird, und dabei die Spreizzunge, vorzugsweise von der Spreizschräge, und die Ankerzunge, vorzugsweise von der Ankerschräge, radial verdrängt werden.

Besonders bevorzugt ist es, dass die Ankerzunge beim Versetzen des Ankerbolzens relativ zur Spreizhülse nach hinten anfangs weniger weit radial verdrängt wird als die Spreizzunge. Dies kann durch eine im rückwärtigen Bereich weniger steile Ausgestaltung der Ankerschräge verglichen mit der Spreizschräge erreicht werden. Später wird die Ankerzunge vorzugsweise weiter radial verdrängt als die Spreizzunge, was durch eine im vorderen Bereich steilere Ausgestaltung der Ankerschräge verglichen mit der Spreizschräge erreicht werden kann.

Merkmale, die im Zusammenhang mit dem erfindungsgemässen Spreizanker erläutert werden, können auch bei der erfindungsgemässen Verwendung zum Einsatz kommen, so wie auch umgekehrt Merkmale, die im Zusammenhang mit der erfindungsgemässen Verwendung erläutert werden, auch beim erfindungsgemässen Spreizanker zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Seitenansicht einer ersten Ausführungsform eines erfindungsgemässen Spreizankers;
- Figur 2:: eine Seitenansicht des Ankerbolzens des Spreizankers aus Figur 1 ohne Spreizhülse;
- Figur 3:: eine Seitenansicht der Spreizhülse des Spreizankers aus Figur 1; und
- Figur 4:: eine Längsschnittansicht des Spreizankers aus Figur 1.

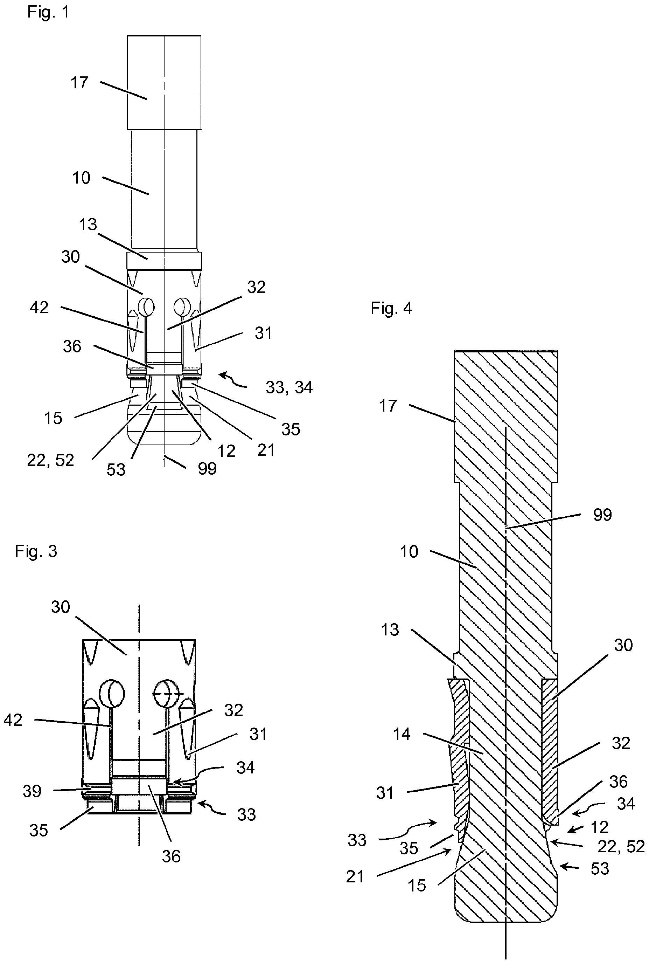

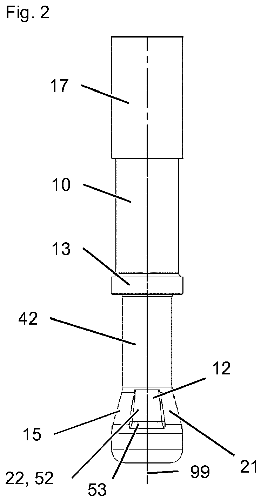

Die Figuren 1 bis 4 zeigen eine Ausführungsform eines erfindungsgemässen Spreizankers. Der Spreizanker weist einen Ankerbolzen 10 mit einer Längsachse 99 sowie eine Spreizhülse 30 auf, wobei die Spreizhülse 30 den Ankerbolzen 10 ringförmig umgibt. Der Ankerbolzen 10 weist einen Halsbereich 14 mit zumindest annähernd konstantem Querschnitt auf. Im Anschluss an den Halsbereich 14 weist der Ankerbolzen 10 vor dem Halsbereich 14, im vorderen Endbereich des Ankerbolzens 10, einen Spreizkörper 15 für die Spreizhülse 30 auf, der hier beispielhaft integral mit dem Rest des Ankerbolzens 10 ausgeführt ist. Am Spreizkörper 15 weitet sich der Ankerbolzen 10 an seiner Aussenoberfläche ausgehend vom Halsbereich 14 nach vorne hin auf, das heisst der Spreizkörper 15 konvergiert an seiner Aussenseite nach hinten hin. Die Spreizhülse 30 umgibt den Halsbereich 14 des Ankerbolzens 10. Der Spreizkörper 15 ist grösstenteils vor der Spreizhülse 30 angeordnet.

Der Ankerbolzen 10 weist ferner einen beispielsweise als Kreisring ausgebildeten Hülsenanschlag 13 auf, der eine Axialbewegung der Spreizhülse 30 zum rückwärtigen Ende des Ankerbolzens 10 hin, das heisst eine Axialbewegung der Spreizhülse 30 vom Spreizkörper 15 hinweg, begrenzt.

An seinem dem Spreizkörper 15 entgegengesetzten rückwärtigen Endbereich weist der Ankerbolzen 10 eine, hier beispielsweise als Aussengewinde dargestellte, Lastangriffsstruktur 17 zum Einleiten von Zugkräften in den Ankerbolzen 10 auf. Auf diesem Aussengewinde kann eine nicht dargestellte Mutter mit korrespondierendem Innengewinde angeordnet sein.

Wie insbesondere Figur 3 weiter zeigt, weist die Spreizhülse 30 Spreizzungen 31 und Ankerzungen 32 auf, die vorderseitig an der Spreizhülse 30 angeordnet sind. Sowohl die Spreizzungen 31 als auch die Ankerzungen 32 zeigen axial nach vorne. Die freien Enden der Spreizzungen 31, die sogenannten freien Spreizzungenenden 33, und die freien Enden der Ankerzungen 32, die sogenannten freien Ankerzungenenden 34, bilden die vordere Stirnseite der Spreizhülse 30. Im vorliegenden Ausführungsbeispiel stehen die Spreizzungen 31 ein Stück weit weiter nach vorne hin vor als die Ankerzungen 32, das heisst die freien Spreizzungenenden 33 liegen ein Stück weit vor den freien Ankerzungenenden 34. Aber auch eine bündige Anordnung oder eine Anordnung, bei der die Ankerzungen 32 weiter nach vorne vorstehen als die Spreizzungen 31, ist möglich.

In der vorliegenden Ausgestaltung folgt in Umfangsrichtung auf eine Spreizzunge 31 eine Ankerzunge 32, dann wieder eine Spreizzunge 31, und so weiter, das heisst es liegt eine alternierende Anordnung vor. Aber auch andere Ausgestaltungen sind denkbar. Benachbarte Zungen 31, 32 werden durch Schlitze 42 getrennt, die sich ausgehend von der vorderen Stirnseite der Spreizhülse 30, die dem Spreizkörper 15 zugewandt ist, axial nach hinten in die Spreizhülse 30 hinein erstrecken.

Die Spreizzungen 31 und die Ankerzungen 32 sind an ihrer jeweiligen Vorderseite und an ihren jeweiligen Längsseiten frei und an ihren jeweiligen Rückseiten miteinander verbunden.

Am jeweiligen freien Ankerzungenende 34 weisen die Ankerzungen 32 jeweils einen Vorsprung 36 auf, der - verglichen mit dem benachbarten Bereich der jeweiligen Ankerzunge 32 - ein kleines Stück radial nach aussen vorsteht, und der durch eine Umbiegung des freien Ankerzungenendes 34 der jeweiligen Ankerzunge 32 radial nach aussen hin gebildet ist. Jeder der Vorsprünge 36 bildet eine radial nach aussen weisende Kralle der jeweiligen Ankerzunge 32. Die Vorsprünge 36 sind insbesondere im Längsschnitt gegeben.

Am jeweiligen freien Spreizzungenende 33 weisen die Spreizzungen 31 an ihrer Aussenseite jeweils eine im Längsschnitt stufenförmige, radial in die Spreizzunge 31 reichende Vertiefung 35 auf. Die Vertiefung ist axial nach vorne hin offen und rückwärtig durch eine Schulter der jeweiligen Spreizzunge begrenzt, wobei die Schulter die Setzstufe der stufenförmigen Vertiefung 35 bildet. Hinter der Vertiefung 35 ist in der vorliegenden Ausgestaltung auf der radialen Aussenseite der Spreizhülse 30 noch eine radial in die Spreizhülse 30 reichende, in Umfangsrichtung verlaufende Nut 39 vorgesehen.

Am Spreizkörper 15 sind Spreizschrägen 21 für die Spreizzungen 31 gebildet, welche den Spreizzungen 31 axial vorgelagert sind. An diesen Spreizschrägen 21 nimmt der Querschnitt des Ankerbolzens 10 nach vorne hin zu. Die Spreizschrägen 21 können die Spreizzungen 31 radial nach aussen drängen, wenn der Ankerbolzen 10 relativ zur Spreizhülse 30 nach hinten versetzt wird und die Spreizzungen 31 dabei auf die Spreizschrägen 21 auflaufen. Die Spreizschrägen 21 bilden hier Abschnitte eines Kegelmantels.

Im Spreizkörper 15 des Ankerbolzens 10 sind Mulden 12 gebildet, die sich radial nach innen zur Längsachse 99 des Ankerbolzens 10 erstreckt. In diesen Mulden 12 sind Ankerschrägen 22 für die Ankerzungen 32 gebildet. An diesen Ankerschrägen 22 nimmt der Querschnitt des Ankerbolzens 10 nach vorne hin zu. Die Ankerschrägen 22 können die in der zugeordneten Mulde 12 angeordnete Ankerzunge 32 radial nach aussen drängen, wenn der Ankerbolzen 10 relativ zur Spreizhülse 30 nach hinten versetzt wird und die Ankerzungen 32 dabei auf die Ankerschrägen 22 auflaufen.

Die Ankerschrägen 22 sind in ihrem jeweils hinteren Bereich 52 weniger steil zur Längsachse 99 angeordnet als in ihrem jeweils vorderen Bereich 53, das heisst die Ankerschrägen 22 schliessen mit der Längsachse 99 des Ankerbolzens 10 in ihrem jeweils vorderen Bereich 53 einen grösseren maximalen spitzen Winkel ein als in ihrem jeweils hinteren Bereich 52. Insbesondere sind die die Ankerschrägen 22 in ihrem jeweils vorderen Bereich 53 steiler zur Längsachse 99 angeordnet als die Spreizschrägen 21, und in ihrem jeweils hinteren Bereich 52 weniger steil zur Längsachse 99 angeordnet als die Spreizschrägen 21.

Beim Montieren des Spreizankers wird der Ankerbolzen 10 mit seinem vorderen Ende voran in Richtung der Längsachse 99 des Ankerbolzens 10 in ein Bohrloch geschoben. Aufgrund des Hülsenanschlags 13, der eine Verschiebung der Spreizhülse 30 zum hinteren Ende des Ankerbolzens 10 blockiert, wird dabei auch die Spreizhülse 30 in das Bohrloch eingebracht. Sodann wird der Ankerbolzen 10, beispielsweise durch Anziehen einer Mutter, die auf der als Aussengewinde ausgebildeten Lastangriffsstruktur 17 angeordnet ist, wieder ein Stück weit aus dem Bohrloch herausgezogen. Aufgrund ihrer Reibung mit der Bohrlochwand bleibt die Spreizhülse 30 dabei zurück und es kommt zu einer axialen Verschiebung des Ankerbolzens 10 relativ zur Spreizhülse 30 nach hinten. Im Verlauf dieser Verschiebung laufen die Spreizzungen 31 auf ihre Spreizschrägen 21 auf und werden von diesen radial gegen die Bohrlochwand nach aussen gedrängt, und die Ankerzungen 32 laufen auf ihre Ankerschrägen 22 auf und werden von diesen radial gegen die Bohrlochwand nach aussen gedrängt. Durch diesen Mechanismus wird der Spreizanker im Substrat fixiert.

Da die Ankerschrägen 22 hinten weniger steil sind als die Spreizschrägen 21, werden zunächst vorrangig die Spreizzungen 31 radial verdrängt. Bei fortschreitender Verankerung treffen die Ankerzunge 32 jedoch auf den steileren vorderen Bereich 53 der jeweiligen Ankerschräge 22 und werden dann ebenfalls verstärkt radial verdrängt.

## Patentansprüche

1. Spreizanker mit einer Spreizhülse (30) und einem Ankerbolzen (10) zum Spreizen der Spreizhülse (30) beim Versetzen des Ankerbolzens (10) relativ zur Spreizhülse (30) nach hinten,
**dadurch gekennzeichnet,**
**dass** die Spreizhülse (30) zumindest eine Spreizzunge (31) mit einem freien Spreizzungenende (33) und zumindest eine Ankerzunge (32) mit einem freien Ankerzungenende (34) aufweist, wobei das freie Spreizzungenende (33) und das freie Ankerzungenende (34) unterschiedlich konfiguriert sind.

2. Spreizanker nach Anspruch 1,
**dadurch gekennzeichnet,**
**dass** das freie Spreizzungenende (33) und das freie Ankerzungenende (34) auf der radialen Aussenseite der Spreizhülse (30) unterschiedlich konfiguriert sind.

3. Spreizanker nach einem der vorstehenden Ansprüche,
**dadurch gekennzeichnet,**
**dass** das freie Spreizzungenende (33) und das freie Ankerzungenende (34) unterschiedliche Längsschnittsformen aufweisen.

4. Spreizanker nach einem der vorstehenden Ansprüche,
**dadurch gekennzeichnet,**
**dass** am freien Ankerzungenende (34) die radiale Aussenseite der Spreizhülse (30) radial nach aussen vorspringt und/oder
**dass** am freien Spreizzungenende (33) die radiale Aussenseite der Spreizhülse (30) radial nach innen zurückversetzt ist.

5. Spreizanker nach einem der vorstehenden Ansprüche,
**dadurch gekennzeichnet,**
**dass** sowohl die Spreizzunge (31) als auch die Ankerzunge (32) nach vorne zeigen.

6. Spreizanker nach einem der vorstehenden Ansprüche,
**dadurch gekennzeichnet,**
**dass** sowohl die Spreizzunge (31) als auch die Ankerzunge (32) vorne an der Spreizhülse (30) vorstehen.

7. Spreizanker nach einem der vorstehenden Ansprüche,
**dadurch gekennzeichnet,**
**dass** die Spreizzunge (31) und die Ankerzunge (32) unterschiedlich weit nach vorne vorstehen.

8. Spreizanker nach einem der vorstehenden Ansprüche,
**dadurch gekennzeichnet,**
**dass** der Ankerbolzen (10) eine nach hinten weisende Spreizschräge (21) zum radialen Verdrängen der Spreizzunge (31) und eine nach hinten weisende Ankerschräge (22) zum radialen Verdrängen der Ankerzunge (32) aufweist, wobei die Ankerschräge (22) zumindest bereichsweise steiler verläuft als die Spreizschräge (21).

9. Spreizanker nach Anspruch 8,
**dadurch gekennzeichnet,**
**dass** die Ankerschräge (22) in einem hinteren Bereich (52) der Ankerschräge (22) weniger steil verläuft als die Spreizschräge (21), und dass die Ankerschräge (22) in einem vorderen Bereich (53) der Ankerschräge steiler verläuft als die Spreizschräge (21).

10. Spreizanker nach einem der Ansprüche 8 oder 9,
**dadurch gekennzeichnet,**
**dass** die Ankerschräge (22) an einer im Ankerbolzen (10) angeordneten Mulde (12) gebildet ist.

11. Spreizanker nach einem der Ansprüche 8 bis 10,
**dadurch gekennzeichnet,**
**dass** sich die Ankerschräge (22) und die Spreizschräge (21) axial überlappen.

12. Spreizanker nach einem der Ansprüche 8 bis 11,
**dadurch gekennzeichnet,**
**dass** der Ankerbolzen (10) einen Spreizkörper (15) aufweist, und dass zumindest die Spreizschräge (21) am Spreizkörper (15) gebildet ist.

13. Verwendung eines Spreizankers nach einem der vorstehenden Ansprüche, bei welcher der Ankerbolzen (10) relativ zur Spreizhülse (30) nach hinten versetzt wird und dabei die Spreizzunge (31) und die Ankerzunge (32) radial verdrängt werden.

14. Verwendung nach Anspruch 13,
**dadurch gekennzeichnet,**
**dass** die Ankerzunge (32) beim Versetzen des Ankerbolzens (10) relativ zur Spreizhülse (30) nach hinten anfangs weniger weit und später weiter radial verdrängt wird als die Spreizzunge (31).
